## Europäisches Patentamt

## European Patent Office

## Office européen des brevets

(19)

(11) Veröffentlichungsnummer: **0 044 545**

**B2**

(12) # NEUE EUROPÄISCHE PATENTSCHRIFT

(45) Veröffentlichungstag der neuen Patentschrift:
04.11.87

(51) Int. Cl.⁴: **B 60 K 5/12**, F 16 F 9/10

(21) Anmeldenummer: **81105652.2**

(22) Anmeldetag: **18.07.81**

(54) Zweikammer-Motorlager mit hydraulischer Dämpfung.

(30) Priorität: **22.07.80 DE 3027742**

(43) Veröffentlichungstag der Anmeldung:
**27.01.82 Patentblatt 82/4**

(45) Bekanntmachung des Hinweises auf die Patenterteilung:
**20.06.84 Patentblatt 84/25**

(45) Bekanntmachung des Hinweises auf die Entscheidung
über den Einspruch:
**04.11.87 Patentblatt 87/45**

(84) Benannte Vertragsstaaten:
**DE FR GB IT SE**

(56) Entgegenhaltungen:
**DE-A-1 650 209**
**DE-A-1 948 423**
**DE-A-2 208 961**
**DE-A-2 716 581**
**DE-A-2 727 244**
**DE-A-2 730 046**
**DE-A-2 802 896**
**DE-A-2 905 090**
**DE-A-2 906 179**
**DE-B-1 180 258**
**DE-B-2 718 121**
**DE-B-2 833 776**
**DE-C-845 125**
**GB-A-2 074 962**
**US-A-2 380 899**
**US-A-3 109 520**

**Die Akte enthält technische Angaben, die nach**

(73) Patentinhaber: **METZELER KAUTSCHUK GMBH,**
**Gneisenaustrasse 15, D-8000 München 50 (DE)**

(72) Erfinder: **Härtel, Volker, Dr., Untere Meerbach 13,**
**D-5414 Vallendar (DE)**
Erfinder: **Hofmann, Manfred, Gerhard von Dietz-**
**Strasse 15, D-6257 Hünfelden 1 (DE)**

(74) Vertreter: **Michelis, Theodor, Dipl.- Ing.,**
**Gneisenaustrasse 15, D-8000 München 50 (DE)**

(56) Entgegenhaltungen: (Fortsetzung)
**dem Eingang der Anmeldung eingereicht wurden**
**und die nicht in dieser Patentschrift enthalten sind.**

EP 0 044 545 B2

## Beschreibung

Die Erfindung betrifft ein Zweikammer-Motorlager mit hydraulischer Dämpfung insbesondere für Kraftfahrzeuge, mit flüssigkeitsgefüllten und gummielastische Umfangswände aufweisenden Kammern, die von einer mit einer Drosselöffnung versehenen Zwischenplatte voneinander getrennt sind, wobei die Umfangswände an einem die Zwischenplatte haltenden Halteflansch befestigt sind.

Ein Zweikammer-Motorlager ist beispielsweise aus der DE-U Nr. 1 805 392 bekannt. Dabei weist die Zwischenplatte eine Drosselöffnung konstanten Querschnittes auf. Durch die Lagerung der Zwischenplatte im gummielastischen Material der Ober- und Unterkammer selbst wird lediglich eine Dichtwirkung erzielt, so dass die Dämpfung insgesamt nur unzureichend ist.

Aus einem andersartig aufgebauten Zweikammer-Motorlager mit gummielastischer Trennwand (DE-B Nr. 2 718 121) ist als Drosselkörper ein axial begrenzt beweglich gehaltener Ringkörper bekannt, der in Abhängigkeit von den Druckdifferenzen in den Kammern den Durchflussquerschnitt verändern kann; derartige bewegliche Ringkörper neigen jedoch bei bestimmten Betriebsfrequenzen zum Klappern, die sich auch nach aussen hin als störendes Geräusch bemerkbar machen.

Demgegenüber liegt der Erfindung die Aufgabe zugrunde, ein Zweikammer-Motorlager zu schaffen, das eine hohe Dämpfung bei geringer Steifigkeit aufweist, um somit eine zunehmende Dämpfung bei höheren Amplituden zu erreichen und grössere Stösse optimal zu unterdrücken; bei hochfrequenten Schwingungen kleiner Amplitude soll das Lager jedoch hydraulisch nicht ansprechen. Ausserdem soll eine optimale Schalldämmung erreicht werden.

Zur Lösung dieser Aufgabe ist ausgehend von einem Zweikammer-Motorlager der eingangs genannten Art erfindungsgemäss vorgesehen, dass die Zwischenplatte im Halteflansch ohne Spiel elastisch gelagert ist, und dass die Drosselöffnung derart ausgebildet ist, dass sie sich mit zunehmender Druckdifferenz zwischen den Kammern selbsttätig zunehmend verschliesst.

Zweckmässigerweise besteht die Drossel aus einem die Zwischenplatte senkrecht durchdringenden, schlauchförmigen Gummieinsatz mit ovalem Innenquerschnitt, wobei die Drossel die Zwischenplatte nach oben und unten überragt.

Ferner kann die Zwischenplatte aus einem elastisch durchbiegbaren Material bestehen oder aber zwischen zwei weichen Gummilagern mit stark progressiver Kennlinie schwingend gelagert sein.

Mit einer derartigen Ausbildung des Motorlagers wird erreicht, dass Schwingungen kleiner Amplitude und hoher Frequenz nur geringfügig durch Ansprechen der Zwischenplane gedämpft werden, ohne dass ein Flüssigkeitsaustausch zwischen der oberen und unteren Kammer stattfindet, während bei Schwingungen mit grösser werdenden Amplituden und niedriger Frequenz eine zunehmende Dämpfung durch zunehmenden Flüssigkeitsaustausch stattfindet.

Weitere zweckmässige Ausgestaltungen der Erfindung sind in den Unteransprüchen genannt.

Anhand einer schematischen Zeichnung sind Aufbau und Wirkungsweise eines Ausführungsbeispiels nach der Erfindung näher erläutert.

Dabei zeigen

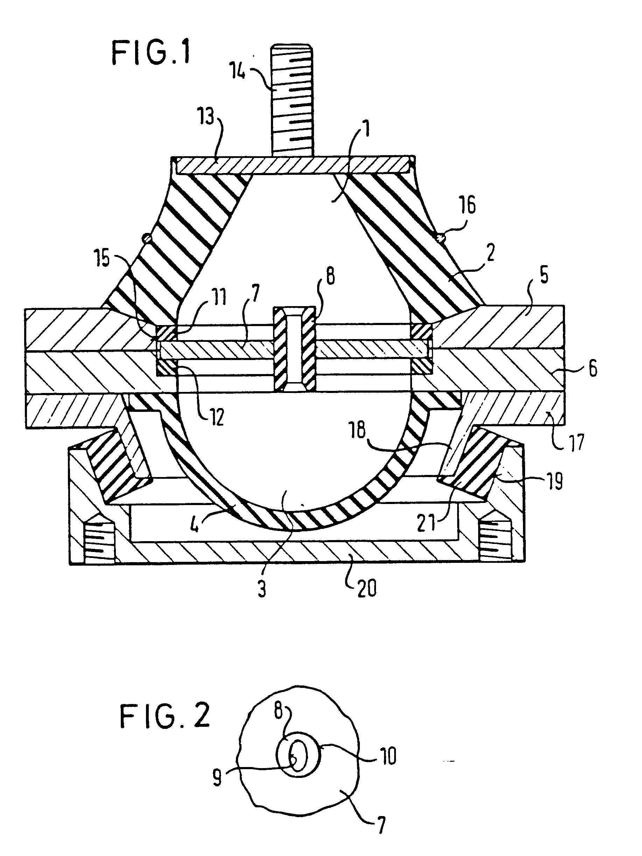

Fig. 1 einen Querschnitt durch das Zweikammer-Motorlager, und

Fig. 2 eine Aufsicht auf die Zwischenplatte mit eingesetztem Drosselkorper.

Wie aus der Zeichnung ersichtlich ist, besteht das Motorlager im wesentlichen aus einer oberen, motorseitigen Kammer 1 und einer unteren Kammer 3, die durch eine Zwischenplatte 7 mit einer Drossel 8 getrennt sind. Die obere Kammer 1 wird dabei von einer starkwandigen, hohlkegelförmigen Kammerwandung 2 aus gummielastischem Material gebildet, die an der oberen Stirnseite von einer Stirnplatte 13 mit einem aufgesetzten Gewindebolzen 14 abgeschlossen und am unteren Ende mit dem oberen Flansch 5 eines geteilten Halteflansches 5 und 6 zum Anschluss an ein noch zu beschreibendes Widerlager haftend verbunden ist. Die untere Kammer 3 wird von einer beispielsweise halbkugelförmigen Kammerwandung 4 aus ebenfalls gummielastischem Material gebildet, die mit dem unteren Flansch 6 haftend verbunden ist.

Zwischen die beiden Kammern 1 und 3 ist in eine Umfangsnut 15 der Halteflansche 6 und 5 die Zwischenplatte 7 eingesetzt die in einem weichen Gummilager, beispielsweise in Form von zwei Gummiringen 11 und 12 mit stark progressiver Kennlinie gehalten ist. In diese Zwischenplatte 7 ist zentral eine aus einem schlauchförmigen Gummieinsatz bestehende Drossel 8 eingesetzt, die zweckmässigerweise einen kreisförmigen Aussenquerschnitt 10 und einen ovalen oder elliptischen von Innenquerschnitt 9 aufweist.

Die Funktionsweise des erfindungsgemässen Zweikammer-Motorlagers ist nunmehr die folgende:

Bei grossen Amplituden geringer Frequenz findet über die Drossel 8 ein Flüssigkeitsaustausch statt der eine Dämpfung bewirkt. Bei steigenden Frequenzen, die im Kraftfahrzeug mit geringere Amplitude auftreten, wird zunehmend die schwingend gelagert oder elastisch durchbiegbar ausgebildete Zwischenplatte 7 zu Schwingungen angeregt ohne dass ein Flüssigkeitsaustausch von der oberen Kammer 1 zur unteren Kammer 3 oder umgekehrt stattfindet. Damit ist in diesem Bereich die Dämpfung nur sehr gering.

Messungen haben gezeigt, dass der Kammerinnendruck bei konstanten Amplituden mit steigender Frequenz zunimmt. Dieser Effekt wird ausgenutzt, um mit der variablen Drossel 8 den Flüssigkeitsaustausch durch Verringerung des Drosselquerschnittes mit steigendem Druckgefälle weiter zu unterbinden und bei hohen Frequenzen die Drossel ganz zu schliessen. Die Dämpfung ist jetzt nur noch bestimmt durch die Dämpfung der Kammerwandung 2.

Durch die starkwandige Ausführung dieser Kammer 2 bleibt darüber hinaus das Motorlager auch bei eventuellen Undichtigkeiten und damit Auslaufen der Kammerflüssigkeit voll funktionsfähig, da die Kammerwandung 2 allein trägt und für sich über 90 % der Gesamttragfähigkeit bzw. der statischen Federsteifigkeit des mit Flüssigkeit gefüllten Motorlagers aufweist.

Ein weiterer Vorteil des neuen Motorlagers besteht darin, dass der gesamte Lagerflansch 5, 6 über eine weitere elastische Lagerung 21 mit stark progressiver Kennlinie mit dem Fahrzeug verbunden wird. Dazu ist unterhalb der Flanschhälfte 6 ein weiterer Ringflansch 17 mit einem konisch nach unten zulaufenden Ring 18 angeordnet, wobei zwischen der Aussenseite des konischen Ringes 18 und einer konisch zulaufenden Gegenfläche 19 der eigentlichen Lagerhaltung 20 ein weiteres Gummilager 21 mit stark progressiver Kennlinie schwacher Dämpfung eingeschaltet ist. Somit stellt das gesamte Lager erfindungsgemäss eine Doppellagerung dar, so dass das Lager aus einem stark progressiven, schwach dämpfenden Gummilager in Serie mit einem hydraulisch gedämpften Lager in Form des oben beschriebenen Zweikammer-Motorlagers besteht. Das in Serie geschaltete Gummilager 21 absorbiert dabei einen grossen Teil der hochfrequenten Schwingungen kleiner Amplituden und bewirkt in Verbindung mit den oben beschriebenen Massnahmen, nämlich der elastisch gelagerten oder elastisch durchbiegbaren Zwischenplatte 7 und der variablen Drossel 8 eine sehr geringe Zunahme der dynamischen Steifigkeit mit steigender Frequenz. Damit ergibt sich jenseits der Zwischenmassenresonanz vor allem im akustischen Bereich eine deutliche Verbesserung der Isolations- und Dämmwerte.

Insgesamt zeichnet sich das erfindungsgemässe Zweikammer-Motorlager durch eine hohe Dämpfung insbesondere grosser Schwingungsamplituden niedriger Frequenz bei geringer Steifigkeit 4 aus, wobei kleine Amplituden hoher Frequenzen nur wenig gedämpft werden. Trotz seines einfachen Aufbaus bleibt das Motorlager darüber hinaus auch bei Undichtigkeiten voll funktionsfähig und bewirkt wegen seiner Ausführung als Doppellager unter Ausnutzung des Zwischenmasseneffektes trotz geringer Abmessungen eine gute Schalldämmung im akustischen Bereich.

## Patentansprüche

1. Zweikammer-Motorlager mit hydraulischer Dämpfung, insbesondere für Kraftfahrzeuge, mit flüssigkeitsgefüllten und gummielastische Umfangswände (2, 4) aufweisenden Kammern (1, 3), die von einer mit einer Drosselöffnung (8) versehenen Zwischenplatte (7) voneinander getrennt sind, wobei die Umfangswände (2, 4) an einem die Zwischenplatte (7) haltenden Halteflansch (5, 6) befestigt sind, dadurch gekennzeichnet, dass die Zwischenplatte (7) im Halteflansch (5,6) ohne Spiel elastisch gelagert ist, und dass die Drosselöffnung (8) derart ausgebildet ist, das sie sich mit zunehmender Druckdifferenz zwischen den Kammern (1, 3) selbsttätig zunehmend verschliesst.

2. Zweikammer-Motorlager nach Anspruch 1, dadurch gekennzeichnet, dass die Drossel (8) aus einem die Zwischenplatte (7) senkrecht durchdringenden, schlauchförmigen Gummieinsatz mit ovalem Innenquerschnitt (9) besteht.

3. Zweikammer-Motorlager nach Anspruch 2, dadurch gekennzeichnet, dass die Drossel (8) einen solchen Querschnitt aufweist, dass sie unter maximalem Kammerdruck von 3 bis 4 bar etwa ab 2 bar selbsttätig zusammendrückbar ist und den Durchflussquerschnitt abschliesst.

4. Zweikammer-Motorlager nach den Ansprüchen 1 bis 3, dadurch gekennzeichnet, dass die Zwischenplatte (7) aus einem elastisch durchbiegbaren Material besteht.

5. Zweikammer-Motorlager nach den Ansprüchen 1 bis 3, dadurch gekennzeichnet, dass die Zwischenplatte (7) schwingend gelagert ist.

6. Zweikammer-Motorlager nach Anspruch 5, dadurch gekennzeichnet, dass die Zwischenplatte (7) zwischen zwei weiche Gummilager (11, 12) mit stark progressiver Kennlinie gespannt ist.

7. Zweikammer-Motorlager nach Anspruch 1, dadurch gekennzeichnet, dass die untere Kammer (3) halbkugelförmig ausgebildet ist.

8. Zweikammer-Motorlager nach den Ansprüchen 1 bis 7, gekennzeichnet durch eine zweiteilige Ausführung, bei der auf dem oberen (5) des zweiteiligen Halteflansches (5, 6) eine hohlkegelförmige Kammerwandung (2) aus gummielastischem Material mit einer einen Gewindebolzen (14) aufweisenden Stirnplatte (13) aufgesetzt und die an den unteren Halteflansch (6) angrenzende Kammer (3) von einer Kammerwandung (4) aus gummielastischem Material gebildet ist, und dass die mit der Drossel (8) versehene Zwischenplatte (7) in einer inneren Umfangsnut (15) der Halteflansche (5, 6) gelagert ist.

9. Zweikammer-Motorlager nach Anspruch 8, dadurch gekennzeichnet, dass die hohlkegelförmige Kammerwandung (2) auf ihrer Aussenseite von einem metallischen Stützring (16) umgeben ist.

10. Zweikammer-Motorlager nach Anspruch 8 dadurch gekennzeichnet, dass das Zweikammer-Motorlager (1, 3) über ein weiteres, stark progressives und niedrig dämpfendes Gummilager (21) in Druck- oder Druck-Schub-Anordnung auf eine Lagerplane (20) gelagert ist, derart, dass die Masse des Zweikammer-Motorlagers (1, 3) als Zwischenmasse der Serienschaltung von hydraulisch gedämpftem Lagerteil (1, 3) und Gummilage (21) wirkt.

## Claims

1. A two chamber-engine bearing with hydraulic damping, in particular for motor vehicles, which has liquid-filled chambers (1, 3) having rubber elastic peripheral walls (2, 4), chambers which are separated from each other by an intermediate plate (7) which is provided with a throttle opening (8), the peripheral walls (2, 4) being connected to a supporting flange (5, 6) which supports the intermediate plate (7), characterised in that the intermediate plate (7) is resiliently mounted without play in the supporting flange (5, 6) and the throttle opening (8) is designed in such a way that it automatically closes to an increasing extent as the pressure difference between the chambers (1, 3) increases.

2. A two-chamber engine bearing according to claim 1, characterised in that the throttle (8) comprises a tubular rubber insert having an oval inner cross-section (9) which perpendicularly penetrates the intermediate plate (7).

3. A two-chamber engine bearing according to claim 2, characterised in that the throttle (8) has a cross-section such that it may be automatically compressed under maximum pressure in the chamber of from 3 to 4 bar about from 2 bar, and seals off the throughflow cross-section.

4. A two-chamber engine bearing according to claims 1 to 3, characterised in that the intermediate plate (7) is composed of an elastically flexible material.

5. A two-chamber engine bearing according to claims 1 to 3, characterised in that the intermediate plate (7) is mounted in a swinging manner.

6. A two-chamber engine bearing according to claim 5, characterised in that the intermediate plate (7) is clamped between two soft rubber bearings (11, 12) which have a markedly progressive characteristic line.

7. A two-chamber engine bearing according to claim 1, characterised in that the lower chamber (3) has a semi-spherical shape.

8. A two-chamber engine bearing according to claims 1 to 7, characterised by a two-part design, in which, on the upper (5) of the two-part supporting flange (5, 6) a face (13) having a threaded bolt (14) is superimposed on a hollow conical chamber wall (2) composed of rubber elastic material and the chamber (3) which is adjacent to the lower supporting flange is formed by a chamber wall (4) composed of rubber elastic material and the intermediate plate (7) which is provided with the throttle (8) is mounted in an inner peripheral groove (15) of the supporting flanges (5, 6).

9. A two-chamber engine bearing according to claim 8, characterised in that the outer surface of the hollow conical chamber wall (2) is surrounded by a metallic supporting ring (16).

10. A two-chamber engine bearing according to claim 8, characterised in that the two-chamber engine bearing (1, 3) is mounted in a pressure or pressure-pushing arrangement on a bearing plate (20) by means of a further markedly progressive and poorly damping rubber bearing (21) such that the mass of the two-chamber engine bearing (1, 3) acts as the intermediate mass of the series connection of the hydraulically damped bearing part (1, 3) and the rubber bearing (21).

## Revendications

1. Support de moteur à deux chambres et à amortissement hydraulique, notamment pour des véhicules automobiles, comprenant des chambres (1, 3), qui sont emplies de liquide, qui ont des parois de pourtour (2, 4) ayant l'élasticité du caoutchouc et qui sont séparées l'une de l'autre par une plaque intermédiaire (7) munie d'une ouverture à étranglement (8), les parois de pourtour (2, 4) étant fixées à une bride maintien (5, 6) maintenant la plaque intermédiaire (7), caractérisé en ce que la plaque intermédiaire (7) est montée élastiquement sans jeu dans la bride de maintien (5, 6) et en ce que l'ouverture à étranglement (8) est agencée de manière à se fermer automatiquement de plus en plus au fur et à mesure que la différence de pression entre les chambres (1, 3) augmente.

2. Support de moteur à deux chambres suivant la revendication 1, caractérisé en ce que l'étranglement (8) est constitué d'une pièce rapportée en caoutchouc, ayant la forme d'un tuyau souple de section droite intérieure (9) ovale, traversant perpendiculairement la plaque intermédiaire (7).

3. Support de moteur à deux chambres suivant la revendication 2, caractérisé en ce que l'étranglement (8) a une section droite telle qu'il peut se comprimer automatiquement sous une pression maximale régnant dans les chambres de 3 à 4 bar environ, à partir d'une pression de 2 bar.

4. Support de moteur à deux chambres suivant l'une des revendications 1 à 3, caractérisé en ce que la plaque intermédiaire est en une matière pouvant fléchir d'une manière élastique.

5. Support de moteur à deux chambres suivant l'une des revendications 1 à 3, caractérisé en ce que la plaque intermédiaire (7) est montée oscillante.

6. Support de moteur à deux chambres suivant la revendication 5, caractérisé en ce que la plaque intermédiaire (7) est serrée entre deux supports en caoutchouc mou (11, 12) ayant une courbe caractéristique très progressive.

7. Support de moteur à deux chambres suivant la revendication 1, caractérisé en ce que la chambre inférieure (3) est hémisphérique.

8. Support de moteur à deux chambres suivant l'une des revendications 1 à 7, caractérisé par une réalisation en deux parties dans laquelle, sur le dessus (5) de la bride de maintien (5, 6) en deux parties, est posée une paroi (2) formant chambre qui a la forme d'un cône creux et qui est en une matière ayant l'élasticité du caoutchouc, avec une plaque frontale (13) présentant un boulon fileté (14), la chambre (3) adjacente à la bride de maintien (6) inférieure étant formée par une paroi (4) formant chambre en une matière ayant l'élasticité du caoutchouc, et en ce que la plaque intermédiaire (7) munie de l'étranglement (8) est montée dans une gorge périphérique intérieure (15) de la bride de maintien (5, 6).

9. Support de moteur à deux chambres suivant la revendication 8, caractérisé en ce que la paroi (2) formant chambre, en forme de cône creux, est entourée sur sa partie extérieure d'une bague d'appui (16) métallique.

10. Support de moteur à deux chambres suivant la revendication 8, caractérisé en ce que le support de moteur à deux chambres (1, 3) est monté par l'intermédiaire d'un autre support en caoutchouc (21) très progressif et à amortissement faible, sur une plaque-support suivant un agencement à pression ou à pression tiré poussé, de manière que la masse du support de moteur à deux chambres (1, 3) agisse en tant que masse intermediaire du montage en série, de la partie formant support (1, 3) à amortissement hydraulique et du support en caoutchouc (21).

## FIG.1

## FIG.2